(19) **Europäisches Patentamt European Patent Office Office européen des brevets**

(11) **EP 1 369 516 B1**

(12) **EUROPEAN PATENT SPECIFICATION**

(45) Date of publication and mention
of the grant of the patent:
**09.09.2009 Bulletin 2009/37**

(51) Int Cl.:
**D04B 27/10** (2006.01)

(21) Application number: **03018522.7**

(22) Date of filing: **30.10.1998**

(54) **Schuss knitted netting**

Schuss gewirktes Netz

Filet tricoté à trame

(84) Designated Contracting States:
**AT BE CH CY DE DK ES FI FR GB GR IE IT LI LU MC NL PT SE**

(30) Priority: **25.11.1997 US 978235**

(43) Date of publication of application:
**10.12.2003 Bulletin 2003/50**

(62) Document number(s) of the earlier application(s) in accordance with Art. 76 EPC:
**98308916.0 / 0 919 655**

(73) Proprietor: **Tama Plastic Industry**
**19236 Israel (IL)**

(72) Inventors:
• **Mass, Nissim**
**19236 Israel (IL)**
• **Leiber, Yuval**
**19236 Israel (IL)**

(74) Representative: **Grey, Ian Michael et al**
**Venner Shipley LLP**
**20 Little Britain**
**London EC1A 7DH (GB)**

(56) References cited:
**DE-A- 4 301 231          US-A- 2 682 163**
**US-A- 4 397 160**

EP 1 369 516 B1

## Description

This invention relates to a knitting machine for knitting polyolefin ribbons into netting with longitudinal and lateral ribbons, at least one of said lateral polyolefin ribbons of said knitted netting having an actual length more than 110% of the length of a calculated schuss length for said knitted netting, the machine including a plurality of knitting needles and a flat surface trick plate. Such a machine is known from DE-A-4301232. Knitted netting as is used in wrapping, e.g. loads on pallets and bales of agricultural products. The invention also provides a method of manufacturing a knitted netting with the knitting machine of the invention.

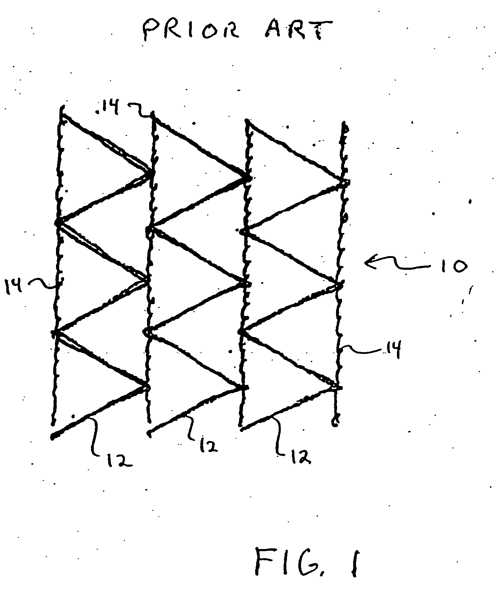

Figure 1 of the accompanying drawings shows a prior art knitted Raschel netting 10 including schuss ribbons 12 and franze ribbons 14 of the type described in US Patent No. 5104714. Because of the triangular pattern in the knitted netting, all Raschel netting becomes narrower when pulled lengthwise. For example, when wrapping a pallet with conventional Raschel netting, when the netting is stretched about 60%, the netting may change in width from 50cm to about 25cm. When a longitudinal force is applied to the knitted netting, the franzes become longer. The longer the franze gets, the longer the schuss must be to maintain the same netting dimensions. However, up to a certain degree of elongation, the schuss does not extend because the schuss tends to straighten rather than elongate. The straighter the schusses, the smaller the distance between franzes, and the narrower the netting becomes resulting in transverse shrinkage of the knitted netting.

Transverse shrinkage has been inherent in Raschel knitted netting for as long as machines to produce such knitted netting have existed. It is well known that conventional Raschel netting becomes narrower even while being knitted on Raschel knitting machines. For example, if 48" Raschel knitted netting is desired, about 50" netting is knitted because the netting becomes narrower by about 2" between the knitting and the winding zones.

When a constant netting width is needed, the width can be regulated by changing the schuss tension in the knitting machine. The producers of knitted netting machines provide a facility on their machines to regulate the netting width, which depends on many factors including the type of material, temperature, ribbon dimensions, knitting tension, and knitting pattern. The knitting machine producers are aware that netting shrinkage is inherent in Raschel knitted netting. Such producers are also aware that increased tension on the schuss creates a narrower netting and loosened tension on the schuss prevents narrowing to some degree. Changing the schuss tension, however, is insufficient to fully overcome transverse shrinkage in knitted netting.

US patent No. 4781291 acknowledges that a problem with Raschel knitted netting is that it shrinks in overall width when pulled lengthwise due to the geometric pattern of the knitted netting and proposes a netting of square openings, instead of Raschel triangles, to solve the problem. By having transverse strands perpendicular to the longitudinal strands, creating rectangular openings instead of triangular, transverse shrinkage is overcome.

Accordingly, there is a need in the art for a knitting machine that produces a knitted netting which does not shrink at all during the production process. Further, there is a need in the art for a knitting machine that produces a knitted netting that maintains its full width during production and may also be widened to more than its full production width.

The present invention provides a knitting machine for polyolefin ribbons into knitted netting with longitudinal and lateral ribbons and is characterised in that the trick plate includes corrugations which force the schusses to traverse a longer distance as the schusses move between needles of the knitting machine than would be traversed in a knitting machine having a trick plate without said corrugations, as the schusses follow the curvature of the corrugated trick plate.

Preferred embodiments of the invention will now be described, by way of example only, with reference to the accompanying drawings, in which:

Figure 1 shows a prior art knitted Raschel netting;
Figure 2 shows a knitted Raschel netting knitted on a knitting machine in accordance with the invention;
Figure 3a illustrates a roll of knitted netting knitted on a knitting machine of the invention;
Figure 3b illustrates a partially unrolled roll of knitted netting;
Figure 3c illustrates calculation of schuss length for knitted netting;
Figure 4a shows a corrugated trick plate for use in the knitting machine of the invention;
Figure 4b shows a single round piece for use with a corrugated trick plate;
Figure 5 shows a shrinkage/elongation curve for conventional knitted netting;
Figure 6 shows a shrinkage/elongation curve for knitted netting made on a knitting machine according to the invention;
Figure 7 shows a hay bale wrapped with conventional knitted netting; and
Figure 8 shows a hay bale wrapped with knitted netting made on a knitting machine according to the invention.

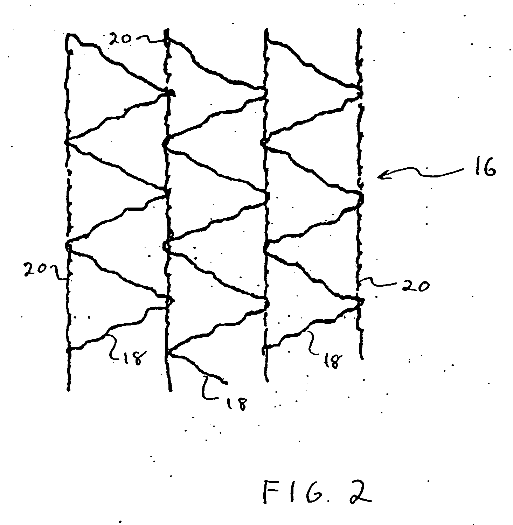

Figure 2 shows a knitted Raschel netting 16 which has a "modified" schuss 18 relative to the schuss of conventional knitted netting and which has been made on the knitting machine of the invention. The modified schuss has a length longer than the schuss length obtained when loosened to the maximum permitted by the knitting machine. For example, a knitted netting including a modified schuss that is about 30% longer than the prior art schuss provided by the knitting machine becomes narrower by about 12% at 60% elongation of the knitted netting during wrapping, while the same netting without modified schuss becomes narrower by about 50% at 60% elongation.

The schuss is created by moving the schuss ribbon between two needles while the netting being knitted moves longitudinally in the knitting machine. Because of the two directional movement, the schuss 18 creates legs of a triangle while the franze 20 creates a triangle base. The tension of the schuss can be adjusted, but is limited and can only produce schuss with an actual length less than 110% of the calculated length of the leg of the triangle created by moving the schuss ribbon between two needles at the longitudinal speed.

The preferred amount of elongation of the schuss length depends upon the particular netting application. For elastic pallet wrapping, the preferred actual schuss length is about 135% of the calculated schuss length for the netting. For conventional wrapping netting with an elongation at break of about 20%, a modified schuss is not needed because such netting only elongates about 1-3% in normal use and does not exhibit transverse shrinkage.

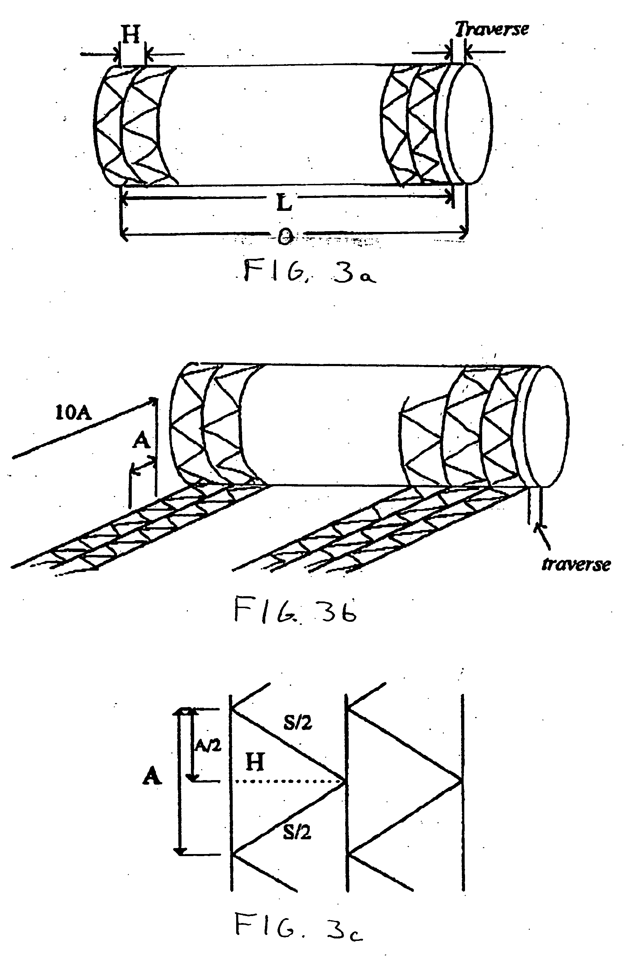

The characteristics of the netting made on the knitting machine of the present invention may be seen by comparing an actual schuss length of a given netting length with a calculated schuss length. The netting has an actual schuss length more than 110% of the calculated schuss length. The suggested procedure for comparing actual schuss length with calculated schuss length is illustrated in Figures 3a and 3c and may be described as follows:

1) Measure the length (L) between the two extreme franzes on a roll of knitted netting as shown in Figure 3a. (The overall roll length is shown as O).

2) Divide the length (L) by the number of franzes minus one to define an average distance between two franzes (H).

3) Unroll some of the knitted netting and measure the length between 10 such distances (10A) and divide them by 10 to define an average length between two triangle legs (A) as shown in Figure 3b. This measurement should be performed while applying about 50g to the franzes on which the schuss will be measured.

4) Calculate the schuss (S) length between two triangle legs as shown in Figure 3c as follows:

$$S = 2\left(\sqrt{(A/2)^2 + H^2}\right)$$

5) Determine an actual schuss length for distance 10A by unrolling some of the knitted netting and transversely cutting the franzes and schusses. Take out the schuss between two franzes and measure the length of the schuss while flattening the schuss on a flat plate to determine the actual schuss length (ASL).

6) For Modified Schuss Knitted Netting of the invention, ASL will exceed 10S by more than 10%.

Existing Raschel knitting machines do not provide a facility for providing a modified schuss. The maximum loosened schuss which can be knitted on these machines can at best widen the netting a little bit, but even so the netting will tend to narrow.

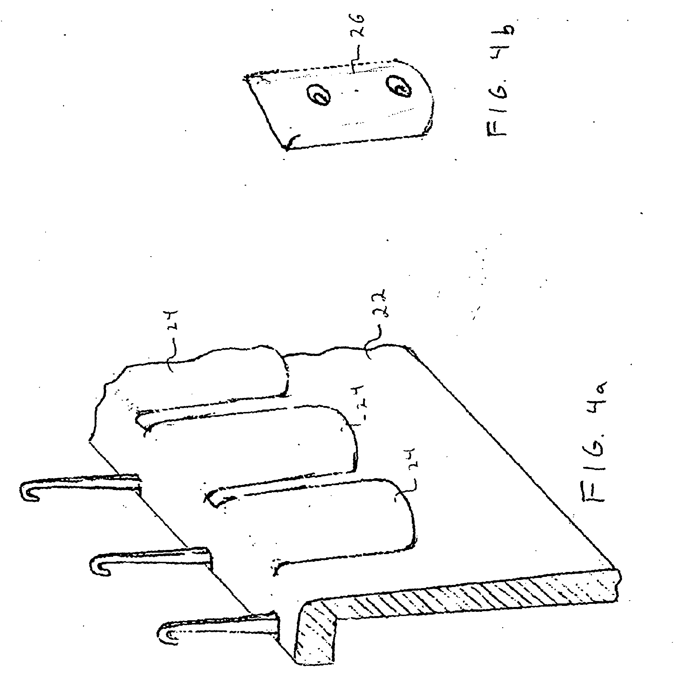

In order to create a modified schuss and to overcome such knitting machine limitations, a corrugated trick plate as shown in Figure 4a is incorporated into the knitting machine of the invention. The use of a conventional trick plate is illustrated, for example, in US patent No. 3646782. The corrugated trick plate includes a flat plate 22 providing corrugations 24 which force the schusses to traverse a longer distance as the schusses move between the knitting machine needles than would be traversed in a conventional knitting machine. The schusses cannot move in a straight line; the schusses must follow the curvature of the corrugated trick plate. Accordingly, when the knitted netting leaves the corrugated trick plate, the schuss length is longer than the original. The thicker the corrugations between needles on the flat plate, the longer the schusses that are produced.

Where an equal amount of schuss modification is needed over the complete netting width, a corrugated plate as described with respect to Figure 4a may be used. Where modified schuss is required only on particular schusses, a flat plate absent corrugations (not shown) may be used to produce a thicker area between particular needles. This can be achieved by attaching a round piece 26 to the flat plate by means of a screw or other suitable fastener. Round piece 26 is shown in Figure 4b. With the Modified Schuss Knitted Netting it is not possible to regulate the netting width by increasing the schuss tension as was done in conventional knitted netting. When knitting with modified schuss, the width will always remain the same and will be a function of the number of needles and the distance between them. There will be no shrinking during the knitting process. The width in the Modified Schuss Knitted Netting can differ only in quantum amounts equivalent to the distance between needles.

It may be appreciated that there are many distinct advantages to the present invention. Insertion or removal of a single round piece is simple. Locating the right parts in the right place when different amounts of schuss modification are needed at different places across the netting is simplified, as a different thickness of the single round piece can be used.

It is important that when the same amount of schuss modification is needed over the netting width, a single corrugated trick plate (as shown in Figure 4a) may be used.

The amount of schuss modification created on the complete netting width can be varied to some degree by regulating the schuss tension. This is done by regulating the schuss tension on the existing machine. Only when a different amount of modified schuss across the netting width is needed would different single round pieces (distinguishable by their different thicknesses) be used.

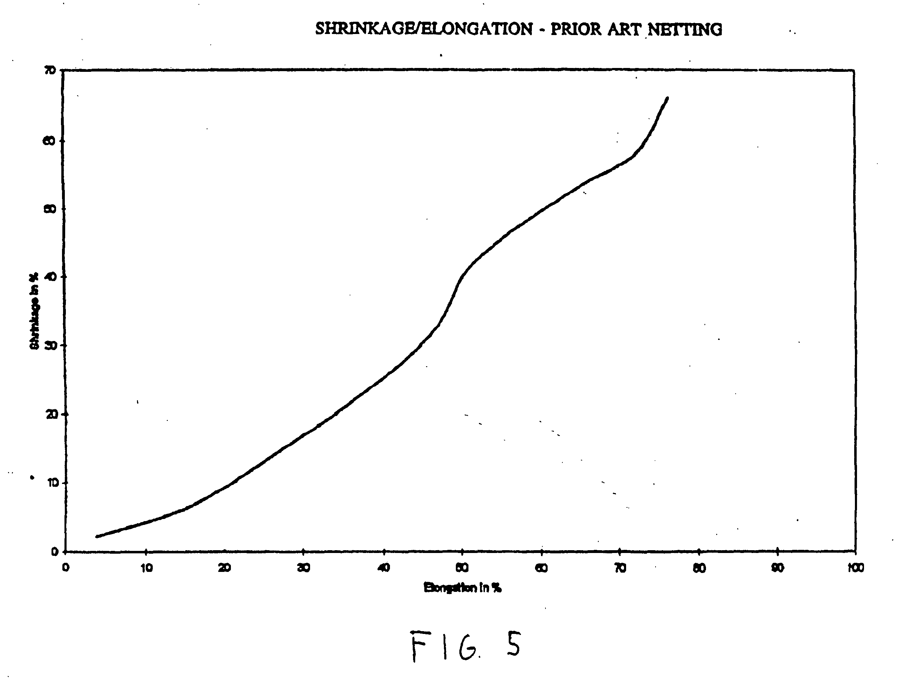

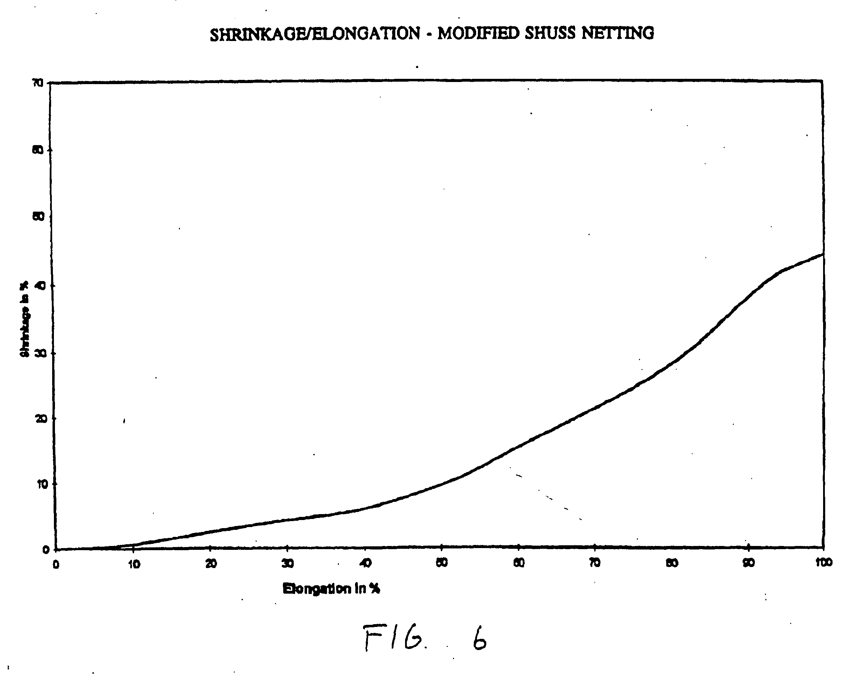

It will be appreciated by those skilled in the art that the Modified Schuss Knitted Netting made on a machine according to the invention provides many unexpected advantages over conventional knitted netting. In particular, the Modified Schuss Knitted Netting is somewhat stronger, perhaps because the schusses do not create radial stresses on the franzes as in conventional knitted netting. Comparing Figures 5 and 6, it will be appreciated that the slope of the shrinkage/elongation curve created by the Modified Schuss Knitted Netting is a function of the amount by which the schuss is modified. A very small degree of shrinkage always occurs in the Modified Schuss Knitted Netting at the moment when longitudinal force is applied.

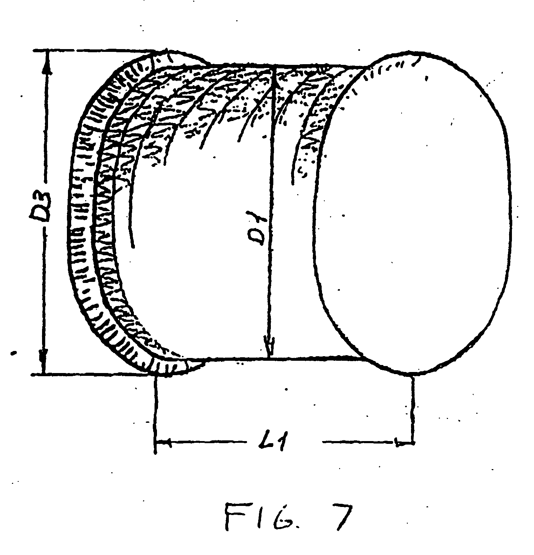

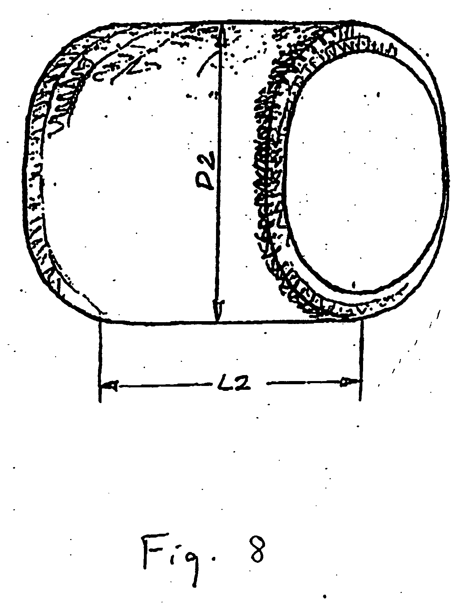

Comparing Figures 7 and 8, when wrapping a round hay bale by using Modified Schuss Knitted Netting wider than the bale, a considerable amount of over-edge coverage is achieved considering the number of franzes on the outside of the hay bale. (Note that in the Figures D1=D2, L1=L2, and D3>D2). Over-edge-wrapping of hay bales provides the advantage of increasing the covered area on both sides of the bale. Because the franze length would be reduced on the smaller diameter at the extremities, some folding or pleating would be expected to occur as the net spread over the edge. However, the amount of over-edge coverage has been found to be a function of the net elongation while wrapping and the amount of modified schuss. For example, if the circumference length of the last franze is x% shorter and the bale wrapping is performed with an x+1% stretch, then the last franze will create a 1% elongation. In this case, even if the shorter franze stretches only 1%, the schusses spread to their maximum length with respect to the length of the modified schuss. Therefore, the distance between the two franzes in this case is larger than the distance between the two needles on the machine. The netting merely does not shrink in width when wrapped around the bale (the distances between franzes remain nearly constant without narrowing), but on both sides of the bale, the distance between franzes becomes more than the distance between needles, due to radial forces that are created which spread the schusses to their maximum modified length.

In addition to the foregoing properties, the modified netting can also be widened to more than its original width, even where longitudinal force is applied on the netting. Such phenomenon is created on the peripheral portions of the bale as discussed above.

The present invention is applicable to all kinds of netting containing longitudinal franze and lateral schusses. Even in netting with horizontal schusses which create quadrant openings there will be an advantage if it is knitted with modified schuss.

Such netting usually does not shrink on its lengthwise direction; but without modified schuss it could not be widened to more than its original width. It will be appreciated that a knitted netting may be produced with only some loosened schusses on both sides or at any place along the net width, the netting can be widened during wrapping process, at any predetermined area of the wrapped load, etc.

Knitted netting may also be produced with different amounts of schuss modification. If a given number of franzes are over the edge, by using higher schuss modification on those franzes would create higher coverage on both bale sides.

**Claims**

1. A knitting machine for knitting polyolefin ribbons into netting with longitudinal and lateral ribbons (20,18), at least one of said lateral polyolefin ribbons of said knitted netting having an actual length more than 110% of the length of a calculated schuss length for said knitted netting, the machine including a plurality of knitting needles and a flat surface trick plate (22), **characterised in that** the trick plate (22) includes corrugations (24) which force the schusses to traverse a longer distance as the schusses move between needles of the knitting machine than would be traversed in a knitting machine having a trick plate (22) without said corrugations (24), as the schusses follow the curvature of the corrugated trick plate (22).

2. The machine according to claim 1, wherein the curvature of the trick plate (22) is such that, when a polyolefin ribbon that is formed into the lateral ribbon (18) travels over the curvature, an actual ribbon length that is about 30% greater than a calculated ribbon length is produced.

3. A method of manufacturing knitted netting with a knitting machine having a flat trick plate (22) including corrugations (24) and a plurality of knitting needles, wherein lateral polyolefin ribbons (18) and longitudinal polyolefin ribbons (22) are supplied to the knitting machine such that at least one of said lateral polyolefin ribbons of said knitted netting has an actual length more than 110% of the length of a calculated schuss length for said knitted netting, the method including the step of forcing the schusses to follow the curvature of the corrugated trick plate (22) provided by said corrugations (24) such that the schusses traverse a longer distance as they move between needles of the knitting machine than would be traversed in a knitting machine having a trick plate (22) without said corrugations (24).

4. The method of claim 3, **characterised in that** the plurality of modified lateral ribbons (18) are formed to have an actual length that is about 30% greater than said calculated ribbon length.

## Patentansprüche

1. Strickmaschine zum Verstricken von Polyolefinbändern zu Netzware mit Längs- und Querbändern (20, 18), wobei wenigstens eines der genannten Polyolefinquerbänder der genannten gestrickten Netzware eine Ist-Länge von mehr als 110 % der Länge einer berechneten Schusslänge für die genannte gestrickte Netzware hat, wobei die Maschine eine Vielzahl von Stricknadeln und ein Fräsblech mit flacher Oberfläche (22) aufweist, **dadurch gekennzeichnet, dass** das Fräsblech (22) Riffeln (24) aufweist, welche die Schüsse zwingen, eine längere Entfernung zu durchqueren, während sich die Schüsse zwischen Nadeln der Strickmaschine bewegen, als in einer Strickmaschine mit einem Fräsblech (22) ohne die genannten Riffeln (24) durchquert würde, da die Schüsse der Krümmung des geriffelten Fräsblechs (22) folgen.

2. Strickmaschine nach Anspruch 1, bei der die Krümmung eines Fräsblechs (22) dergestalt ist, dass, wenn ein Polyolefinband, das zu dem Querband (18) geformt wird, über die Krümmung läuft, eine Ist-Bandlänge produziert wird, die etwa 30 % größer als eine berechnete Bandlänge ist.

3. Verfahren zum Herstellen von gestrickter Netzware mit einer Strickmaschine, die ein flaches Fräsblech (22) mit Riffeln (24) und eine Vielzahl von Stricknadeln hat, wobei Polyolefin-Querbänder (18) und Polyolefin-Längsbänder (22) der Strickmaschine so zugeführt werden, dass wenigstens eines der genannten Polyolefin-Querbänder der genannten gestrickten Netzware eine Ist-Länge von mehr als 110 % der Länge einer berechneten Schusslänge für die genannte gestrickte Netzware hat, wobei das Verfahren den Schritt des Zwingens des Schusses zum Folgen der von den genannten Riffeln (24) bereitgestellten Krümmung des geriffelten Fräsblechs (22) aufweist, so dass die Schüsse eine längere Entfernung durchqueren, während sie sich zwischen Nadeln der Strickmaschine bewegen, als in einer Strickmaschine mit einer Fräsblech (22) ohne die genannten Riffeln (24) durchquert würde.

4. Verfahren nach Anspruch 3, **dadurch gekennzeichnet, dass** die Mehrzahl der modifizierten Querbänder (18) so ausgebildet sind, dass sie eine Ist-Länge haben, die etwa 30 % größer als die genannte berechnete Bandlänge ist.

## Revendications

1. Machine à tricot pour tricoter des rubans de polyoléfine en un filet avec des rubans longitudinaux et latéraux (20, 18), au moins un desdits rubans de polyoléfine latéraux dudit filet tricoté ayant une longueur réelle supérieure à 110 % de la longueur d'une longueur de trame calculée pour ledit filet tricoté, la machine comprenant une pluralité d'aiguilles de tricot et une plaque d'abattage à surface plate (22), **caractérisée en ce que** la plaque d'abattage (22) comprend des cannelures (24) qui forcent les trames à traverser une distance supérieure alors que les trames se déplacent entre les aiguilles de la machine à tricot à celle qui serait traversée dans une machine à tricot ayant une plaque d'abattage (22) sans lesdites cannelures (24), alors que les trames suivent la courbure de la plaque d'abattage cannelée (22).

2. Machine selon la revendication 1, dans laquelle la courbure de la plaque d'abattage (22) est telle que, lorsqu'un ruban de polyoléfine qui est formé dans le ruban latéral (18) se déplace sur la courbure, une longueur de ruban réelle qui est d'environ 30 % supérieure à une longueur de ruban calculée est produite.

3. Procédé de fabrication d'un filet tricoté avec une machine à tricot ayant une plaque d'abattage plate (22) comprenant des cannelures (24) et une pluralité d'aiguilles de tricot, dans lequel des rubans de polyoléfine latéraux (18) et des rubans de polyoléfine longitudinaux (22) sont fournis à la machine à tricot de sorte qu'au moins un desdits rubans de polyoléfine latéraux dudit filet tricoté a une longueur réelle supérieure à 110 % de la longueur d'une longueur de trame calculée pour ledit filet tricoté, le procédé comprenant l'étape de forcer les trames à suivre la courbure de la plaque d'abattage cannelée (22) fournie par lesdites cannelures (24) de sorte que les trames traversent une distance supérieure alors qu'elles se déplacent entre les aiguilles de la machine à tricot à celle qui serait traversée dans une machine à tricot ayant une plaque d'abattage (22) sans lesdites cannelures (24).

4. Procédé selon la revendication 3, **caractérisé en ce que** la pluralité de rubans latéraux modifiés (18) sont formés pour avoir une longueur réelle qui est d'environ 30 % supérieure à ladite longueur de ruban calculée.

PRIOR ART

FIG. 1

FIG. 2

H            Traverse

L

θ

FIG. 3a

10A

A

traverse

FIG. 3b

S/2

A/2    H

A

S/2

FIG. 3c

26

FIG. 4b

24

22

24

24

FIG. 4a

SHRINKAGE/ELONGATION - PRIOR ART NETTING

FIG. 5

EP 1 369 516 B1

Elongation in %

FIG. 6

FIG. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4301232 A
- US 5104714 A
- US 4781291 A
- US 3646782 A